# EUROPÄISCHE PATENTSCHRIFT

(11) **EP 2 663 479 B1**
(45) Veröffentlichungstag und Bekanntmachung des Hinweises auf die Patenterteilung: **06.04.2016**
(21) Anmeldenummer: 12700114.7
(22) Anmeldetag: 09.01.2012
(51) Int. Cl.: B60T 17/04

(54) **KUPPLUNGSKOPF-ANORDNUNG FÜR EINE VERBINDUNG EINES ANHÄNGERS AN EIN ZUGFAHRZEUG**
COUPLING HEAD ARRANGEMENT FOR CONNECTING A TRAILER TO A TOWING VEHICLE
ENSEMBLE DE TÊTES D'ACCOUPLEMENT POUR L'ACCOUPLEMENT D'UNE REMORQUE AVEC UN VÉHICULE TRACTEUR

(30) Priorität: 11.01.2011 DE 102011008271
(43) Veröffentlichungstag der Anmeldung: 20.11.2013
(73) Patentinhaber: KNORR-BREMSE Systeme für Nutzfahrzeuge GmbH, 80809 München (DE)
(72) Erfinder: PAHL, Stefan, 82256 Fürstenfeldbruck (DE); MAJLATH, Attila, H-6000 Kecskemét (HU); DALI, István, H-6000 Kecskemét (HU); SOVAGO, Szabolcs, H-6000 Kecskemet (HU); PAPP, Lajos, H-6100 Kiskunfélegyháza (HU)
(86) Internationale Anmeldenummer: PCT/EP2012/050246
(87) Internationale Veröffentlichungsnummer: WO 2012/095389

(56) Entgegenhaltungen:
- EP-A2- 0 167 968
- DE-A1- 1 505 404
- DE-A1- 19 931 162

## Beschreibung

### Gebiet der Erfindung

Die vorliegende Erfindung betrifft eine Kupplungskopf-Anordnung für ein pneumatisches Verbinden eines Luftbremssystems eines Anhängers an einem Zugfahrzeug, mittels einer Versorgungsleitung und einer Serviceleitung, welche ein dementsprechend ausgeformtes Paar Kupplungsköpfe nutzen. Eine gattungsgemäße Kupplungskopf-Anordnung geht z.B. aus DE-A-15 05 404 hervor.

Viele Anhänger-an-Zugfahrzeug-Kupplungs-Anordnungen bestehen aus zwei Druckluftlinien, um eine pneumatische Verbindung zwischen dem Bremssystem des Zugfahrzeuges und dem Bremssystem des Anhängers zu bilden.

### Hintergrund der Erfindung

Die EP 0 378 811 B1 offenbart solch ein Bremssystem, dass mindestens einen Bremskreislauf hat, welcher durch ein Bremsventil gesteuert wird, ein Anhänger-Steuerventil besitzt, welches den Druck in dem Anhänger-Bremskreislauf steuert und ein Doppelleitungs-Bremssystem mit einer Anhänger-Bremssteuerung, verbunden an den Anhänger-Steuerventil über die Anhänger-Bremssystemleitung und einer Anhänger-Versorgungsleitung. Auf diese Weise sind die Versorgungsleitung und die Serviceleitung des Zugfahrzeug-Kreislaufes an die entsprechenden Leitungen des Anhänger-Kreislaufes verbunden. Der Versorgungsdruck an der Versorgungsleitung wird üblicherweise von einem Anhängervorratsspeicher bereitgestellt, um das Angebot für das Anhänger-Bremsventil sicherzustellen. Die Serviceleitung ist üblicherweise durch ein Belastungsventil, in Form einer Steuereingabe-Einheit, an das Anhänger-Bremsventil angeschlossen. Bremsservice-Ausgaben des Anhänger-Bremsventils sind direkt an Service- oder weiteren Betätigungskolben der Anhängerachsen des Zugfahrzeuges angebracht.

DE 199 31 162 A1 offenbart einen mechanischen Kupplungskopf für die Bereitstellung einer Luftverbindung zwischen einem Zugfahrzeug und einem Anhänger. Für eine Zweileitungsverbindung sind zwei dieser Kupplungsköpfe notwendig. Jeder Kupplungskopf beinhaltet mechanisch steuerbare Verriegelungselemente, um eine sichere Luftverbindung jeweils zwischen der Versorgungsleitung und der Serviceleitung zu gewährleisten. Darüber hinaus ist ein Filtereinsatz direkt im Kupplungskopf integriert.

Üblicherweise werden zwei Typen von Kupplungsköpfen angeboten, wobei der eine Typ Kupplungsköpfe zu den Versorgungsleitungen passt und der andere Typ Kupplungsköpfe zu den Serviceleitungen passt. Aufgrund hemmender Mittel kann der Versorgungsleitung-Kupplungskopf des Zugfahrzeuges nur mit dem dazugehörigen Versorgungsleitung-Kupplungskopf des Anhängers gekoppelt werden. Wiederum kann der Serviceleitung-Kupplungskopf des Zugfahrzeuges nur mit dem dazugehörigen Serviceleitung-Kupplungskopf des Anhängers gekoppelt werden.

Der Ablauf des Ankoppelns und Entkoppelns der zuvor bekanntgemachten Kupplungsköpfe ist nicht eingeschränkt. Daher ist es möglich die Versorgungsleitung zuerst anzukoppeln. Es ist ebenfalls möglich die Serviceleitung zuerst zu entkoppeln. Derart versehentliches Koppeln und Entkoppeln des Lastzugs (verbundenes Zugfahrzeug und Anhänger) oder des nicht verbundenen Anhängers während des Ankoppelungs- oder Entkoppelungsvorganges, kann nicht vermieden werden.

Es ist die Aufgabe dieser Erfindung, eine Anordnung aufzuzeigen, um einen Anhänger mit einem Zugfahrzeug zu verbinden, welche unbeabsichtigtes Wegrollen während des Kopplungsvorganges verhindert und welches geometrisch kompatibel zu konventionellen Typen von Kupplungsköpfen ist, die für Versorgungsanschlüsse und Bedienungsanschlüsse benutzt werden.

### Kurze Beschreibung der Erfindung

In Anlehnung an die Erfindung, beinhalten die Anhänger-Kupplungsköpfe eine querverlaufende pneumatische Verbindung zwischen der Versorgungsleitung und der Serviceleitung, u m nach dem Ankoppeln des Zugfahrzeug-Kupplungskopfes der Serviceleitung, an dem dafür vorgesehenem Anhänger-Kupplungskopf, die Serviceleitung mit Druck zu beaufschlagen.

Bedingt durch die besondere Kupplungsanordnung, bezugnehmend auf die vorliegende Erfindung, ist der Anhänger effektiv gegen das selbstständige Wegrollen vom Kopplungsvorgang gesichert. Weiterhin ist es nicht notwendig, den Aufbau der genutzten Zugfahrzeug-Kupplungsköpfe zu ändern. Wenn der Zugfahrzeug-Kupplungskopf der Versorgungsleitung zuerst an seinem entsprechenden Anhänger-Kupplungskopf angekoppelt wird, strömt sein Versorgungsdruck über der querverlaufenden pneumatischen Verbindung zwischen der Versorgungsleitung und der Serviceleitung ebenfalls zu der Serviceleitung, um den Bremskreislauf des Anhängers zu aktivieren. Dadurch verhindert der Versorgungsdruck das Wegrollen des Anhängers während des Kopplungsvorganges.

Wenn der andere Kupplungskopf der Serviceleitung ebenfalls mit seinem entsprechenden Kupplungskopf am Anhänger verbunden ist, wird der Versorgungsdruck, der zum Anhänger-Bremskreislauf geleitet wurde abgeschaltet, und der Kontrolldruck des Serviceleitung-Kupplungskopfes bremst den Anhänger. Diese Funktion stellt ein spezielles Abschlussventil sicher, welches in der Serviceleitungs-Sektion des Anhänger-Kupplungskopfes integriert ist. Das Abschlussventil bewahrt vor einem Abfließen von Versorgungsluft durch das Verbindungselement des Anhänger-Kupplungskopfes während des Kopplungsverfahrens. Andererseits, wenn der Serviceleitung-Kupplungskopf zuerst angekoppelt wird, d.h. vor dem Versorgungsanschluss-Kupplungskopf, wird das Parksignal der Serviceleitung den Anhänger bremsen.

Das Abschlussventil ist vorzugsweise als monostabiler 3/2-Ventilsitz aufgebaut, welcher durch ein ausführendes Element eines Betätigungselementes mechanisch gesteuert wird und durch die genannte Versorgungsleitung des Anhänger-Kupplungskopfes verläuft. In der normalen Schaltposition dichtet das Abschlussventil die Versorgungsleitung ab, um einen Abfluss der Versorgungsluft zu verhindern. Eingeblasene Luft strömt von der Versorgungsleitung zur Serviceleitung um das Luftbremssystem des Anhängers einzuschalten. In der aktivierten Schaltposition verhindert das Abschlussventil einen weiteren Luftfluss von der Versorgungsleitung zur Serviceleitung, wodurch die Versorgungsleitung geöffnet wird. Daher ist ein Luftfluss von der Zugfahrzeug-Serviceleitung zu dem Luftbremssystem des Anhängers möglich, um das Luftbremssystem des Anhängers durch pneumatische Signale vom Zugfahrzeug zu steuern.

Um eine sichere Abdichtungsfunktion zu gewährleisten, beinhaltet das ausführende Element des Abschlussventils zwei Abdichtungskanten, welche auf gegenüberliegenden Seiten des Stellgliedes angeordnet sind, die mit Ventilaufnahmen korrespondieren, welche in einer internen Ventilkammer für die Anpassung des ausführenden Elementes angeordnet sind, vorzugsweise innerhalb des Anhänger-Kupplungskopfes der Serviceleitung.

Wenn der Serviceleitung-Kupplungskopf zuerst abgekoppelt wird, dann aktiviert die eingeblasene Luft des Versorgungsleitung-Kupplungskopfes die Luftbremse des Anhängers, um den Anhänger mit Versorgungsdruck im gebremsten Zustand zu halten. Nach dem Abkoppeln des Versorgungsleitung-Kupplungskopfes, wird der Anhänger automatisch durch einen Federbremsenmechanismus gebremst.

In Anlehnung an einem anderen Aspekt der vorliegenden Erfindung, kann im Besonderen das Paar Kupplungsköpfe des Anhängers und/oder des Zugfahrzeuges, in Form einer einzigen Monoblock-Einheit realisiert werden, um ein gemeinsames Gehäuse für beide Kupplungsköpfe zu benutzen. Dennoch ist es ebenfalls möglich entsprechende Blockeinheiten für eine alleinstehende Version zu nutzen. Bei der Monoblock-Einheit, wird die querverlaufende pneumatische Verbindung, bevorzugt durch eine Leitung zwischen den Einzelblock-Einheiten gebildet.

Um ein Vertauschen der Kupplungsköpfe, welche verbunden werden müssen, zu verhindern werden zwei Typen von Kupplungsköpfen empfohlen. Demnach passt die geometrische Form des Versorgungsleitung-Kupplungskopfes des Zugfahrzeuges nur auf die Form des Versorgungsleitung-Kupplungskopfes des Anhängers.

Die technische Lösung, wie oben beschrieben, kann auf pneumatische Bremsverbindungen zwischen einem Anhänger und einem Zugfahrzeug, nach ISO 1728-Standard oder dem sogenannten Typ-C Standard, welcher in Großbritannien genutzt wird und spezielle Merkmale von Kupplungsköpfe auflistet, angewendet werden.

Die vorangehenden und andere Aspekte der Erfindung werden ersichtlich wenn der detaillierten Beschreibung der Erfindung gefolgt wird und mit den beigefügten Zeichnungen in Verbindung gebracht wird.

### Kurze Beschreibung der Zeichnungen

- Figur 1: zeigt schematisch die Monoblock-Einheit fixiert auf dem Anhänger im unangekoppelten Zustand,
- Figur 2: zeigt die Einheit aus Figur 1 im angekoppelten Zustand,
- Figur 3: zeigt schematisch die alleinstehende Einheit fixiert am Anhänger im unangekoppelten Zustand, und
- Figur 4: zeigt die Einheit aus Figur 3 im angekoppelten Zustand.

### Detaillierte Beschreibung der Zeichnungen

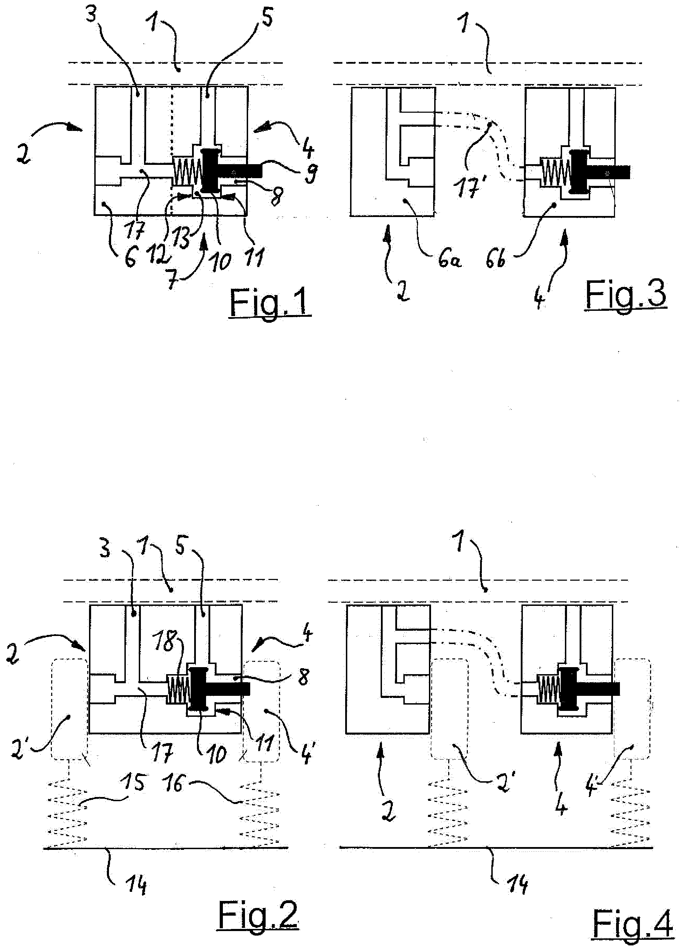

Bezugnehmend auf Figur 1 ist an einer Verbindungsstelle eines Anhängers 1, ein erster Kupplungskopf 2 für einen Versorgungsanschluss 3 mit Druckluft für das Luftbremssystem des Anhängers 1 gebildet.

Angrenzend an dem ersten Kupplungskopf 2 ist ein zweiter Kupplungskopf 4 an dem Anhänger 1 angeordnet, um die Serviceleitung 5, die das Luftbremssystem des Anhängers 1 steuert, zu verbinden.

Beide Kupplungsköpfe 2 und 4 des Anhängers 1 sind in einer gemeinsamen Monoblock-Einheit 6 integriert, welche ein gemeinsames Gehäuse für die besagten Kupplungsköpfe 2 und 4 bildet.

In der Serviceleitung 5 ist ein Abschlussventil 7 integriert. Das Abschlussventil 7 beugt einem Versorgungsluftstrom durch einen Verbindungsanschluss 8 des Kupplungskopfes 4, während der Kopplungsablaufs vor. Das Abschlussventil 7 ist mechanisch gesteuert durch ein ausführendes Element 9 eines Betätigungselements 10. Das ausführende Element 9 erstreckt sich durch den Verbindungsanschluss 8 des Kupplungskopfes 4, um einen mechanischen Schalter zu bilden.

Mit Blick auf Figur 2 korrespondiert der Kupplungskopf 2 des Anhängers 1 mit einem Kupplungskopf 2' des Zugfahrzeuges 14. Andererseits korrespondiert der Kupplungskopf 4 des Anhängers 1 mit einem Kupplungskopf 4' des Zugfahrzeuges 14. Der Zugfahrzeug-Kupplungskopf 2' der Versorgungsleitung 3 beinhaltet eine flexible Strömungsmittel-Leitung 15, andererseits ist der Zugfahrzeug-Kupplungskopf 4' über eine flexible Strömungsmittel-Leitung 16 mit dem Zugfahrzeug 14 verbunden. Die Kupplungskopf-Versorgungsleitung 2' des Zugfahrzeuges 14 passt nur auf die Form der Kupplungskopf-Versorgungsleitung 2 des Anhängers. Darüber hinaus passt die geometrische Form der Kupplungskopf-Versorgungsleitung 4' des Zugfahrzeuges 14 nur auf die Form des Kupplungskopf-Serviceleitung 4 des Anhängers 1.

In Anlehnung an die Erfindung werden die Anhänger-Kupplungsköpfe 2 und 4 über eine querverlaufende pneumatische Verbindung 17 verbunden, welche zwischen der Versorgungsleitung 3 und der Serviceleitung 5, über das zuvor genannte Abschlussventil verläuft. Die querverlaufende pneumatische Verbindung 17 leitet Luftdruck von der Versorgungsleitung 3 zu der Serviceleitung 5, wenn der Zugfahrzeug-Kupplungskopf 2' angeschlossen ist und der andere Zugfahrzeug-Kupplungskopf 4' immer noch nicht angeschlossen ist, um das Wegrollen des Anhängers 1 zu verhindern.

Wenn der Zugfahrzeug-Kupplungskopf 4' der Serviceleitung 5 ebenfalls angeschlossen ist (wie gezeigt), übernimmt die Serviceleitung 5 die Steuerung der Luftbremse des Anhängers 1 indem das Abschlussventil 7 angesteuert wird. In diesem Fall ist eine integrierte Druckfeder 18 im eingefahrenen Zustand und das ausführende Element 10 schließt den Ventilsitz 12, um die Druckluftzufuhr der Versorgungslinie zu stoppen.

Andererseits, wenn der entsprechende Zugfahrzeugkupplungskopf 4' unangekoppelt ist, presst die Druckfeder 18 das ausführende Element 10 in den Ventilsitz 11 des Verbindungsanschlusses 8.

In der alleinstehenden Ausführung, bezugnehmend auf Figur 3, sind beide Kupplungsköpfe 2 und 4 des Anhängers getrennt voneinander. Sie sind entsprechend in den jeweiligen BlockEinheiten 6a und 6b integriert. Zwischen beiden Blockeinheiten 6a und 6b befindet sich eine querverlaufende pneumatische Verbindung 17', in Form einer flexiblen Leitung (Strichpunktlinie).

Figur 4 zeigt die alleinstehende Ausführung der Kupplungsköpfe 2 und 4 des Anhängers, im verbundenem Zustand, wobei die entsprechenden Kupplungsköpfe 2' und 4' des Zugfahrzeuges 14 verbunden sind. Die Funktion der alleinstehenden Vertikale der Erfindung hat dieselbe Funktion wie jene der oben beschriebenen Monoblock-Einheit.

Die Erfindung ist nicht auf die oben beschriebene bevorzugte Gestaltung beschränkt, welche nur als Beispiel dient, aber auf verschiedene Arten durch die nachfolgenden Patentansprüche modifiziert werden kann, im Besonderen durch die Vermeidung unabsichtlicher Abkopplung der pneumatischen und elektrischen Verbindungen.

### Bezugszeichenliste

- 1: Anhänger
- 2: erster Kupplungskopf (Versorgungsleitung des Anhängers)
- 3: Versorgungsleitung
- 4: zweiter Kupplungskopf (Serviceleitung des Anhängers)
- 5: Serviceleitung
- 6: Monoblock-Einheit
- 7: Abschlussventil
- 8: Verbindungsanschluss
- 9: Ausführendes Element
- 10: Betätigungselement
- 11: Ventilsitz
- 12: Ventilsitz
- 13: Ventilkammer
- 14: Zugfahrzeug
- 15: Spiralleitung
- 16: Spiralleitung
- 17: querverlaufende pneumatische Verbindung
- 18: Druckfeder

## Patentansprüche

1. Kupplungskopf-Anordnung für eine pneumatische Verbindung eines Luftbremssystems eines Anhängers (1) an ein Zugfahrzeug (2), mittels einer Versorgungsleitung (3) und einer Serviceleitung (5), welche ein dementsprechend ausgeformtes Paar Kupplungsköpfe (2, 2'; 4, 4') für die Versorgungsleitung (3) und die Serviceleitung (5) nutzen,
**dadurch gekennzeichnet, dass** die Anhänger-Kupplungsköpfe (2, 4) eine, zwischen der Versorgungsleitung (3) und der Serviceleitung (5) querverlaufende pneumatische Verbindung (17) beinhalten, um die Serviceleitung (5), nach der Ankopplung des Zugfahrzeug-Kupplungskopfes (2') der Versorgungsleitung (3) an seinem entsprechenden Anhänger-Kupplungskopf (2) mit Druck zu beaufschlagen.

2. Anordnung nach Anspruch 1,
**dadurch gekennzeichnet, dass** ein Abschlussventil (7), zur Vorbeuge gegen einen Versorgungsluftstrom durch einen Verbindungsanschluss (8) des Anhänger-Kupplungskopfes (4) im Abschnitt der Serviceleitung (5) des Anhänger-Kupplungskopfes (4) integriert ist.

3. Anordnung nach Anspruch 1,
**dadurch gekennzeichnet, dass** das Abschlussventil (7) als monostabiler 3/2-Ventilsitz aufgebaut ist, welcher durch ein ausführendes Element (9) eines Betätigungselementes (10), das sich durch den Verbindungsanschluss (8) des Anhänger-Kupplungskopfes erstreckt, mechanisch gesteuert wird.

4. Anordnung nach Anspruch 3,
**dadurch gekennzeichnet, dass** das ausführende Element (10) des Abschlussventils (7) zwei Abdichtungskannten enthält, welche auf den gegenüberliegenden Seiten des ausführenden Elementes (10) angeordnet sind und mit Ventilsitzen (11, 12) korrespondieren, welche in einer internen Ventilkammer (13) für die Anpassung des ausführenden Elementes (10) verantwortlich sind.

5. Anordnung nach Anspruch 3,
**dadurch gekennzeichnet, dass** eine Druckfeder (18) in der Ventilkammer (13) angeordnet ist, um das Betätigungselement (10) an den Ventilsitz (11) des Verbindungsanschlusses (8) zu drücken, wenn der entsprechende Zugfahrzeug-Kupplungskopf (4') unangekoppelt ist.

6. Anordnung nach Anspruch 1,
**dadurch gekennzeichnet, dass** die Zugfahrzeug-Kupplungsköpfe (2, 4) in einer einzigen Monoblock-Einheit (6) integriert sind.

7. Anordnung nach Anspruch 6,
**dadurch gekennzeichnet, dass** die querverlaufende pneumatische Verbindung (17) durch einen internen Kanal in die Monoblock-Einheit (6) eingeformt ist.

8. Anordnung nach Anspruch 6 oder 7,
**dadurch gekennzeichnet, dass** die Zugfahrzeug-Kupplungsköpfe (2', 4') in den entsprechenden Blockeinheiten (6a, 6b) integriert sind.

9. Anordnung nach Anspruch 1,
**dadurch gekennzeichnet, dass** die querverlaufende pneumatische Verbindung (17') durch eine Leitung zwischen beiden Blockeinheiten (6a, 6b) gebildet wird.

10. Anordnung nach einem der vorangehenden Ansprüche,
**dadurch gekennzeichnet, dass** die geometrische Form des Versorgungsleitung-Kupplungskopfes (2') des Zugfahrzeuges (14) nur auf die Form des Versorgungsleitung-Kupplungskopfes (2) des Anhängers (1) passt und die geometrische Form des Serviceleitung-Kupplungskopfes (4') des Zugfahrzeuges (14) nur auf die Form des Serviceleitung-Kupplungskopfes (4) des Anhängers (1) passt.

11. Handelsübliches Fahrzeug enthaltend ein pneumatisches Bremssystem mit einer Anordnung, um einen Anhänger (1) an einem Zugfahrzeug (14) anzukoppeln, nach einem der vorangehenden Ansprüche.

## Claims

1. Coupling head arrangement for a pneumatic connection between an air brake system of a trailer (1) and a towing vehicle (2) by means of a supply line (3) and a service line (5), the connection using a suitably shaped pair of coupling heads (2, 2'; 4, 4') for the supply line (3) and the service line (5),
**characterised in that** the trailer coupling heads (2, 4) comprise a pneumatic connection (17) extending transversely between the supply line (3) and the service line (5) in order to apply pressure to the service line (5) after the towing vehicle coupling head (2') of the supply line (3) has been coupled to the corresponding trailer coupling head (2).

2. Arrangement according to claim 1,
**characterised in that** a closing valve (7) is integrated into the section of the service line (5) of the trailer coupling head (4) for the prevention of a supply air flow through a connection (8) of the trailer coupling head (4).

3. Arrangement according to claim 1,
**characterised in that** the closing valve (7) is configured as a monostable 3/2-valve seat which is mechanically controlled by an executing element (9) of an actuating element (10) extending through the connection (8) of the trailer coupling head.

4. Arrangement according to claim 3,
**characterised in that** the executing element (9) of the closing valve (7) has two sealing edges which are located on opposite sides of the executing element (9) and correspond to valve seats (11, 12), which are responsible in an internal valve chamber (13) for the adaptation of the executing element (9).

5. Arrangement according to claim 3,
**characterised in that** a compression spring (18) is provided in the valve chamber (13) for pressing the actuating element (10) against the valve seat (11) of the connection (8) if the respective towing vehicle coupling head (4') is not coupled.

6. Arrangement according to claim 1,
**characterised in that** the towing vehicle coupling heads (2, 4) are integrated into a single monobloc unit (6).

7. Arrangement according to claim 6,
**characterised in that** the transversely extending pneumatic connection (17) is formed into the monobloc unit (6) as an internal passage.

8. Arrangement according to claim 6 or 7,
**characterised in that** the towing vehicle coupling heads (2', 4') are integrated into the corresponding bloc units (6a, 6b).

9. Arrangement according to claim 1,
**characterised in that** the transversely extending pneumatic connection (17') ir represented by a line between the two bloc units (6a, 6b).

10. Arrangement according to any of the preceding claims,
**characterised in that** the geometric shape of the supply line coupling head (2') of the towing vehicle (14) only fits the shape of the supply line coupling head (2) of the trailer (1) and the geometric shape of the service line coupling head (4') of the towing vehicle (14) only fits the shape of the service line coupling head (4) of the trailer (1).

11. Commercial vehicle comprising a pneumatic brake system with an arrangement according to any of the preceding claims for coupling a trailer (1) to a towing vehicle (14).

## Revendications

1. Agencement de têtes d'accouplement pour une liaison pneumatique d'un système de frein à air d'une remorque (1) à un véhicule (2) tracteur au moyen d'un conduit (3) d'alimentation et d'un conduit (5) de service, qui utilise, pour le conduit (3) d'alimentation et pour le conduit (5) de service, une paire de têtes (2, 2'; 4, 4') d'accouplement conformées en conséquence,
**caractérisé en ce que** les têtes (2, 4) d'accouplement de remorque comportent une liaison (17) pneumatique s'étendant transversalement entre le conduit (3) d'alimentation et le conduit (5) de service, pour alimenter en pression le conduit (5) de service après l'accouplement de la tête (2') d'accouplement de véhicule tracteur du conduit (3) d'alimentation à sa tête (2) d'accouplement de remorque correspondante.

2. Agencement suivant la revendication 1,
**caractérisé en ce qu'**une vanne (7) d'arrêt pour se prémunir d'un courant d'air d'alimentation, passant dans un raccord (8) de liaison de la tête d'accouplement de remorque, est intégrée au tronçon du conduit (5) de service de la tête (4) d'accouplement de remorque.

3. Agencement suivant la revendication 1,
**caractérisé en ce que** la vanne (7) d'arrêt est constituée en siège de vanne 3/2 monostable, qui est commandé mécaniquement par un élément (9) d'exécution d'un élément (10) d'actionnement, qui s'étend dans le raccord (8) de liaison de la tête d'accouplement de remorque.

4. Agencement suivant la revendication 3,
**caractérisé en ce que** l'élément (10) d'exécution de la vanne (7) d'arrêt comporte deux arêtes d'étanchéité, qui sont disposées sur les bords opposés de l'élément (10) d'exécution et qui correspondent à des sièges (11, 12) de vanne, lesquels sont responsables dans une chambre (13) interne de vanne de l'adaptation de l'élément (10) d'exécution.

5. Agencement suivant la revendication 3,
**caractérisé en ce qu'**un ressort (18) de compression est disposé dans la chambre (13) de vanne pour pousser l'élément (10) d'actionnement sur le siège (11) de vanne du raccord (8) de liaison, lorsque la tête (4') d'accouplement de véhicule tracteur correspondante est désaccouplée.

6. Agencement suivant la revendication 1,
**caractérisé en ce que** les têtes (2, 4) d'accouplement de véhicule tracteur sont intégrées dans un groupe (8) monobloc unique.

7. Agencement suivant la revendication 6,
**caractérisé en ce que** la liaison (7) pneumatique transversale est formée par un canal interne dans le groupe (6) monobloc.

8. Agencement suivant la revendication 6 ou 7,
**caractérisé en ce que** les têtes (2', 4') d'accouplement de véhicule tracteur sont intégrées dans les unités (6a, 6b) monoblocs correspondantes.

9. Agencement suivant la revendication 1,
**caractérisé en ce que** la liaison (17') pneumatique transversale est formée par un conduit entre les deux groupes (6a, 6b) monoblocs.

10. Agencement suivant l'une des revendications précédentes,
**caractérisé en ce que** la forme géométrique de la tête (2') d'accouplement de conduit d'alimentation du véhicule (4) tracteur ne s'adapte qu'à la forme de la tête (2) d'accouplement de conduit d'alimentation de la remorque (1) et la forme géométrique de la tête (4') d'accouplement de conduit de service du véhicule (14) tracteur ne s'adapte qu'à la forme de la tête (4) d'accouplement de conduit de service de la remorque (1).

11. Véhicule commercial comportant un système de frein pneumatique ayant un agencement pour accoupler une remorque (1) à un véhicule (14) tracteur suivant l'une des revendications précédentes.
